(19) Europäisches Patentamt
European Patent Office
Office européen des brevets

(11) EP 4 516 395 A1

(12) EUROPEAN PATENT APPLICATION
published in accordance with Art. 153(4) EPC

(43) Date of publication:
**05.03.2025 Bulletin 2025/10**

(21) Application number: **23796562.9**

(22) Date of filing: **28.04.2023**

(51) International Patent Classification (IPC):
***B01J 20/02*** *(2006.01)* ***B01J 20/30*** *(2006.01)*
***C02F 1/28*** *(2023.01)*

(52) Cooperative Patent Classification (CPC):
**B01J 20/02; B01J 20/30; C02F 1/28**

(86) International application number:
**PCT/JP2023/016988**

(87) International publication number:
**WO 2023/210830 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.04.2022 PCT/JP2022/019876**

(71) Applicants:
- **National University Corporation Kanazawa University**
  **Ishikawa 920-1192 (JP)**
- **Daicel Corporation**
  **Osaka-shi, Osaka 530-0011 (JP)**

(72) Inventors:
- **HASEGAWA, Hiroshi**
  **Kanazawa-shi, Ishikawa 920-1192 (JP)**
- **SAKAI, Yuto**
  **Kanazawa-shi, Ishikawa 920-1192 (JP)**
- **YUNOSHITA, Koki**
  **Kanazawa-shi, Ishikawa 920-1192 (JP)**
- **NAKAKUBO, Keisuke**
  **Kanazawa-shi, Ishikawa 920-1192 (JP)**
- **MASHIO, Asami**
  **Kanazawa-shi, Ishikawa 920-1192 (JP)**
- **WONG, Kuo Hong**
  **Kanazawa-shi, Ishikawa 920-1192 (JP)**
- **ARAI, Takashi**
  **Tokyo 108-8230 (JP)**
- **ENDO, Masaru**
  **Tokyo 108-8230 (JP)**
- **MITSUHASHI, Yoko**
  **Tokyo 108-8230 (JP)**

(74) Representative: **Hoffmann Eitle**
**Patent- und Rechtsanwälte PartmbB**
**Arabellastraße 30**
**81925 München (DE)**

# (54) COMPLEX AND MANUFACTURING METHOD FOR SAME

(57) Provided are: a novel complex capable of efficiently adsorbing and collecting arsenic (V) dissolved in water; and a novel arsenic adsorbent. This complex contains iron (III)-containing particles supported on microfibrous cellulose. At least a portion of the iron (III)-containing particles has an aspect ratio of 2 or more. The iron (III)-containing particles preferably contain at least one iron compound selected from iron oxides, iron hydroxides, and iron oxyhydroxides. This arsenic adsorbent contains the complex.

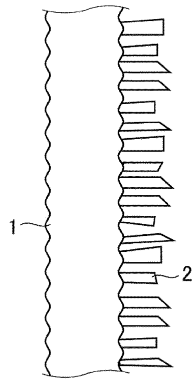


FIG. 8

EP 4 516 395 A1

## Description

Technical Field

The present disclosure relates to a novel complex, a method for producing the same, an arsenic adsorbent containing the complex, a method for producing the same, a method for producing purified water using the arsenic adsorbent, and a water purification device provided with the arsenic adsorbent.

Background Art

Although arsenic is widely distributed in the environment, it is known that arsenic is extremely harmful and causes various diseases and damage to health when ingested over a long period of time even in trace amounts.
Contamination of well water with inorganic arsenic, which occurs in various parts of the world including Southeast Asia, is a major environmental problem. Therefore, a demand has arisen for a method for removing arsenic contained in water.
For example, Patent Document 1 describes that an adsorbent obtained by mixing iron(II) hydroxide with a styrene-acrylic acid copolymer binder and pelletizing the mixture is useful for adsorbing and removing arsenic(III) from strongly acidic water.
Patent Document 1: JP 2008-207110 A

Summary of Invention

Arsenic(V) is adsorbed on the surface of iron. In the adsorbent, the iron(II) hydroxide supported on the binder is dissolved in water, it is difficult to ensure a wide adsorption surface for arsenic(V). In addition, since iron(II) hydroxide is supported by being bonded to the carboxyl group of the styrene-acrylic acid copolymer binder, it is difficult to increase the amount of iron supported per unit weight, and thus arsenic(V) cannot be efficiently adsorbed.
Therefore, an object of the present disclosure is to provide a novel complex having an effect of efficiently adsorbing and recovering arsenic(V) dissolved in water.
Another object of the present disclosure is to provide a method for producing the complex.
Yet another object of the present disclosure is to provide a novel arsenic adsorbent that can efficiently adsorb and recover arsenic(V) dissolved in water.
Still another object of the present disclosure is to provide a method for producing purified water using the arsenic adsorbent.
Yet another object of the present disclosure is to provide a water purification device provided with the arsenic adsorbent.
As a result of diligent research to solve the problems described above, the present inventors discovered the following.

1. Microfibrous cellulose has an extremely large specific surface area, and when iron(III)-containing particles are supported on the surface of the microfibrous cellulose, aggregation of the iron(III)-containing particles can be suppressed, and a large surface area of the iron(III)-containing particles effective for adsorption of arsenic can be ensured.
2. Since microfibrous cellulose has as many as three hydroxyl groups to which iron binds per constituent unit, the amount of iron supported per unit weight can be increased.
3. When the iron(III)-containing particles supported on the microfibrous cellulose are crystallized into acicular shapes, the surface area effective for the adsorption of arsenic can be remarkably increased, and the adsorption efficiency of arsenic is significantly improved.
4. Microfibrous cellulose is excellent in hydrophilicity, and when microfibrous cellulose is immersed in water, water easily permeates into the microfibrous cellulose, and therefore arsenic dissolved in the water is efficiently adsorbed by the iron(III)-containing particles supported on the microfibrous cellulose.

The present disclosure was completed based on these findings.
That is, the present disclosure provides a complex containing microfibrous cellulose and iron(III)-containing particles supported on the microfibrous cellulose, wherein
at least some of the iron(III)-containing particles have an aspect ratio of 2 or greater.
The present disclosure also provides the above-described complex, wherein a supported amount (in terms of elemental iron) of the iron(III)-containing particles per 1 g of the microfibrous cellulose is from 1 to 100 mmol.
The present disclosure also provides the above-described complex, wherein the microfibrous cellulose is

microfibrillated cellulose.

The present disclosure also provides the above-described complex, wherein the iron(III)-containing particles contain at least one iron compound selected from iron oxide, iron hydroxide, and iron oxyhydroxide.

The present disclosure also provides the above-described complex, wherein the iron(III)-containing particles include: at least one iron compound selected from iron oxide, iron hydroxide, and iron oxyhydroxide; and an oxide, hydroxide, or oxyhydroxide of at least one metal selected from zirconium and titanium; and a molar ratio of the iron compound (in terms of the elemental iron) to the oxide, hydroxide, or oxyhydroxide of the metal (in terms of the elemental metal; the total amount when two or more are contained), that is, the molar ratio of [iron/(zirconium and/or titanium)], is from 1 to 100.

The present disclosure also provides the above-described complex, wherein the iron(III)-containing particle has a volume-equivalent sphere diameter of less than 1 μm.

The present disclosure also provides a method for producing a complex, the method including mixing microfibrous cellulose and an iron compound in water in the presence of a crystal habit modifier to cause the microfibrous cellulose to adsorb the iron compound, and subsequently subjecting the mixture to a heating treatment to produce the complex described above.

The present disclosure also provides the above-described method for producing a complex, wherein in the adsorption of the iron compound by the microfibrous cellulose, at least one metal compound selected from a zirconium compound and a titanium compound is adsorbed together with the iron compound.

The present disclosure also provides an arsenic adsorbent containing the complex described above.

The present disclosure also provides a method for producing purified water by treating arsenic-contaminated water with the arsenic adsorbent described above.

The present disclosure also provides a water purification device provided with the arsenic adsorbent described above.

The complex of the present disclosure has a configuration in which acicular iron(III)-containing particles having a large arsenic(V) adsorption surface area are dispersed and supported on microfibrous cellulose having an extremely large specific surface area and excellent hydrophilicity. Therefore, when the complex is immersed in water, arsenic(V) dissolved in the water can be efficiently adsorbed and recovered.

In addition, the complex can selectively adsorb and recover arsenic even when an element having chemical properties similar to those of arsenic, such as phosphorus (P), coexists.

Furthermore, the complex does not cause a problem of exhaust gas even when combusted, and when the complex is combusted and reduced in volume after adsorbing arsenic(V), the cost for disposal such as landfill can be significantly reduced.

Therefore, the complex can be suitably used as an arsenic adsorbent for adsorbing and recovering arsenic from water contaminated with arsenic (particularly arsenic(V)).

## Brief Description of Drawings

FIG. 1 is an SEM image of a complex (1) obtained in Example 1 (magnification: 5000 times).

FIG. 2 is an SEM image of a complex (2) obtained in Example 2 (magnification: 5000 times).

FIG. 3 includes SEM images of the complexes (2), (3), and (4) obtained in Examples 2 to 4. FIG. 3(a) is a visual field at a magnification of 5000 times, FIG. 3(b) is a visual field at a magnification of 10000 times, and FIG. 3(c) is a visual field at a magnification of 5000 times.

FIG. 4 is an SEM image of a complex (5) obtained in Example 5 (magnification: 5000 times).

FIG. 5 is an SEM image of a complex (8) obtained in Reference Example 1 (magnification: 5000 times).

FIG. 6 is a graph showing the relationship between the As(V) adsorption rate of the complex (2) obtained in the Examples and pH.

FIG. 7 is a graph showing the As(V) adsorption rate in the presence of anions, of the complex (2) obtained in the Examples.

FIG. 8 is a diagram showing that iron oxide particles are bonded to the surface of microfibrous cellulose (1) under pressurization and high temperature in a complex of one embodiment of the present disclosure.

FIG. 9 is an SEM image of the complex (5) obtained in Example 5 (magnification: 30000 times).

FIG. 10 is an SEM image of a complex (7) obtained in Example 7 (magnification: 30000 times).

## Description of Embodiments

Hereinafter, an embodiment of the present disclosure will be described in detail. The present disclosure is not

limited to the following embodiment, and can be carried out by making appropriate changes within a range that does not impair the effects of the present disclosure.

Each of the configurations, combinations thereof, and the like in each of the embodiments are examples, and various additions, omissions, substitutions, and other changes of the configurations may be made as appropriate without departing from the spirit of the present disclosure. The present disclosure is not limited by the embodiments and is limited only by the claims.

Each aspect disclosed in the present specification can be combined with any other feature disclosed herein.

Where a particular description given for an embodiment also applies to another embodiment, that description may be omitted in the other embodiment. In addition, a lower limit value and/or an upper limit value of a numerical range described in the present disclosure is a numerical value that is included within the numerical range and may be replaced with a numerical value presented in the examples.

In the present disclosure, the expression "from X to Y" with regard to a numerical range means "X or more and Y or less".

In the present disclosure, an expression "S and/or T" for a component, a substance, or the like means "at least one selected from the group consisting of S and T".

Complex

A complex according to an embodiment of the present disclosure includes microfibrous cellulose and iron(III)-containing particles, and the iron(III)-containing particles are included in a state of being supported on the microfibrous cellulose. Moreover, at least some of the iron(III)-containing particles are particles having an aspect ratio of 2 or greater (hereinafter, which may be referred to as "acicular particles"). The term "acicular particle" means a particle having an aspect ratio of 2 or greater. In one embodiment, a particle having an aspect ratio of 2 or greater may have a shape in which the diameter (or width) decreases toward at least one tip, or a shape in which at least one tip is pointed.

The proportion of acicular particles in the total amount of the iron(III)-containing particles is, for example, 5 wt.% or more, and from the viewpoint of further expanding the arsenic adsorption surface and improving the arsenic adsorption and recovery efficiency, the proportion thereof is preferably 8 wt.% or more, and particularly preferably 10 wt.% or more. The upper limit value of the proportion of acicular particles in the total amount of the iron(III)-containing particles is 100 wt.%, and is preferably 50 wt.%, and more preferably 30 wt.%.

The aspect ratio (particle length / particle diameter) of the acicular particles is 2 or greater. From the viewpoint of being able to expand the arsenic adsorption surface and improve the arsenic adsorption and recovery efficiency, the aspect ratio is preferably 3 or greater, more preferably 5 or greater, and particularly preferably 10 or greater. The upper limit value of the aspect ratio is, for example, preferably 100 or less, more preferably 50 or less, and even more preferably 30 or less. That is, the aspect ratio of the acicular particles may be any combination of these upper and lower limit values, but is preferably from 3 to 100, more preferably from 5 to 50, and still more preferably from 10 to 30.

An aspect ratio of 2 or greater of the acicular particles is easily achieved by growing the particles under hydrothermal conditions (under pressurization and high temperature conditions) in the presence of a crystal habit modifier during production. The formation of acicular particles is easily promoted and/or the aspect ratio of the acicular particles is easily increased by setting the usage amount of a crystal habit modifier to, for example, from 0.1 to 10 parts by weight per 1 part by weight of the iron compound.

The volume-equivalent sphere diameter (hereinafter, may be referred to as the "volume-equivalent diameter") of the acicular particles is, for example, less than 1 μm, preferably 800 nm or less, more preferably 600 nm or less, even more preferably 500 nm or less, and yet even more preferably 400 nm or less. In the case of 400 nm or less, the volume-equivalent sphere diameter may be 200 nm or less or 100 nm or less. The lower limit value of the volume-equivalent sphere diameter is, for example, preferably 1 nm or greater, and more preferably 10 nm or greater. That is, the volume-equivalent sphere diameter of the acicular particle may be any combination of these upper and lower limit values, and is, for example, from 1 nm to less than 1 μm, preferably from 1 nm to 800 nm, more preferably from 10 nm to 600 nm, even more preferably from 10 nm to 500 nm, and yet even more preferably from 10 nm to 400 nm. In the case of from 10 nm to 400 nm, the volume-equivalent sphere diameter may be from 10 nm to 200 nm, or may be from 10 nm to 100 nm.

The "particle length" of a particle means the major axis length of the particle, and the "particle diameter" of a particle means the minor axis length of the particle.

The major axis length and the minor axis length of a particle are lengths of the major axis and the minor axis of the particle, respectively, in a two-dimensional particle image observed with a scanning electron microscope (SEM).

In one embodiment, in at least one two-dimensional SEM particle image, the major axis lengths of ten arbitrarily selected particles and the minor axis lengths of the same particles are measured, and the aspect ratio of at least one of the particles is 2 or greater. When the aspect ratio is 2 or greater, the aspect ratio may be 4 or greater, and may be 4, for example. Further, the major axis lengths of 10 particles and the minor axis lengths of the same particles are measured, and the aspect ratio of preferably 5 wt.% or more of the particles, more preferably 7 wt.% or more of the particles, and still more

preferably 9 wt.% or more of the particles in relation to the total weight of the complex is more preferably 2 or greater. In the case of 9 wt.% or more, the weight percentage may be 10 wt.% or more, 11 wt.% or more, 12 wt.% or more, or 13 wt.% or more.

The volume-equivalent sphere diameter can be determined by SEM observations or image analysis. The volume-equivalent sphere diameter is an average value of values obtained by calculating a volume (V) by multiplying three sides of 10 arbitrarily selected particles in at least one two-dimensional SEM particle image with the particles considered to be rectangular parallelepipeds, and then calculating the volume-equivalent sphere diameter (D) according to the following equation.

$$D = (6/\pi V)^{(1/3)}$$

The iron(III)-containing particles may contain, in addition to the acicular particles, particles having other shapes. Examples of the other shapes include a spherical shape (such as a true spherical shape, a substantially true spherical shape, and an elliptically spherical shape), a polyhedral shape, a flat plate shape, a flaky shape, and an amorphous shape. In other words, the iron(III)-containing particles may include particles having an aspect ratio of less than 2, and examples of the particles having an aspect ratio of less than 2 include the above-described spherical shape (such as a true spherical shape, a substantially true spherical shape, and an elliptical spherical shape), polyhedral shape, flat plate shape, flaky shape, and amorphous shape.

The iron(III)-containing particles preferably contain at least one iron compound (for example, a water-insoluble trivalent iron compound) selected from iron oxide ($Fe_2O_3$), iron hydroxide ($Fe(OH)_3$), and iron oxyhydroxide (FeOOH), and more preferably at least one selected from the group consisting of iron oxide ($Fe_2O_3$) and iron oxyhydroxide (FeOOH).

The iron(III)-containing particles may contain other components in addition to the water-insoluble trivalent iron compound, and for example, may contain an oxide, a hydroxide, or an oxyhydroxide of at least one metal selected from zirconium and titanium, such as zirconium oxide, zirconium hydroxide, zirconium oxyhydroxide, titanium oxide, titanium hydroxide, and titanium oxyhydroxide, or may contain a combination of two or more selected from oxides, hydroxides, and oxyhydroxides of the above metals. The iron(III)-containing particles may contain iron(III) as a mixed oxide with at least one of the above-described other metals.

The above-described oxide, hydroxide, or oxyhydroxide of the metal has excellent affinity for arsenic (for example, pentavalent arsenic). Therefore, when the metal oxide is supported on the surface of the microfibrous cellulose together with the iron component, or when a mixed oxide of the iron component and the metal is supported on the surface of the microfibrous cellulose, the arsenic adsorption capacity can be further improved. When the iron(III)-containing particles contain another component other than the water-insoluble trivalent iron compound, the iron(III)-containing particles more preferably contain at least one selected from the group consisting of oxides and oxyhydroxides of at least one metal selected from zirconium and titanium. When the iron(III)-containing particles contain a mixed oxide of iron(III) and at least one of the other metals, the iron(III)-containing particles preferably contain at least one mixed oxide of zirconium and/or titanium (such as $Fe_xZr_yO_z$, $Fe_xTi_yO_z$).

The iron(III)-containing particles may contain, in any combination, at least two or more selected from a trivalent iron compound, at least one of an oxide, hydroxide or oxyhydroxide of zirconium and/or titanium, and a mixed oxide of iron(III) and at least one of the metals, or may contain all of an iron compound, a zirconium and/or titanium compound, and a mixed oxide of iron and zirconium and/or titanium.

When the iron(III)-containing particles contain the oxide, hydroxide, or oxyhydroxide of the metal together with the water-insoluble trivalent iron compound, the molar ratio of the iron compound (in terms of the elemental iron) to the oxide, hydroxide, or oxyhydroxide of the metal (in terms of the elemental metal; the total amount when two or more are contained), that is, the molar ratio of [iron/(zirconium + titanium)], is from 1 to 100, for example. When the iron(III)-containing particles contain a mixed oxide of iron(III) and the other metal, the molar ratio of the iron(III) (in terms of the elemental iron) to the other metal (in terms of the elemental metal; the total amount when two or more are contained), that is, the molar ratio of [iron/(zirconium + titanium)] is, for example, from 1 to 100.

An upper limit value of the molar ratio is preferably 50, more preferably 30, even more preferably 20, and particularly preferably 15. The lower limit value of the molar ratio is preferably 3, particularly preferably 5, and most preferably 7, That is, the molar ratio of [iron/(zirconium + titanium)] may be any combination of these upper and lower limit values, but is preferably from 3 to 50, more preferably from 3 to 30, even more preferably from 5 to 20, and even more preferably from 7 to 15.

Here, "zirconium + titanium" means "zirconium and/or titanium". That is, [iron/(zirconium + titanium)] means "[iron/(zirconium and/or titanium)]".

In one embodiment, the molar ratio of [iron/(zirconium + titanium)] is preferably the molar ratio of "iron/zirconium" or "iron/titanium".

The content (in terms of elemental iron) of the iron(III)-containing particles in 1 g of the complex (or the total of the

microfibrous cellulose and the iron(III)-containing particles contained in the complex) is, for example, from 10 to 5000 μmol. The upper limit value of the content (in terms of elemental iron) of the iron(III)-containing particles is preferably 4000 μmol, particularly preferably 3500 μmol, and most preferably 3000 μmol. The lower limit value of the content (in terms of elemental iron) of the iron(III)-containing particles is preferably 100 μmol, more preferably 500 μmol, particularly preferably 1000 μmol, and most preferably 1500 μmol, and may be 2000 μmol. That is, the content (in terms of elemental iron) of the iron(III)-containing particles may be any combination of these upper and lower limit values, but is preferably from 100 μmol to 4000 μmol, more preferably from 500 μmol to 4000 μmol, still more preferably from 1000 μmol to 3500 μmol, even more preferably from 1500 μmol to 3500 μmol, and yet even more preferably from 1500 μmol to 3000 μmol, or may be from 2000 μmol to 3000 μmol.

The total supported amount of the iron(III)-containing particles in the complex can be evaluated by the method described in the Examples, that is, by adding 6 mol/L hydrochloric acid to the complex to elute trivalent iron as iron(III) ions, and then measuring the concentration of the iron(III) ions in the eluate with an instrument such as an ICP emission spectrometer.

The content (in terms of elemental iron) of the iron(III)-containing particles per 1 g of the microfibrous cellulose in the complex is, for example, from 1 to 100 mmol, preferably from 1 to 50 mmol, more preferably from 1 to 10 mmol, particularly preferably from 1 to 5 mmol, and most preferably from 1 to 3 mmol.

The content of the iron(III)-containing particles in relation to the microfibrous cellulose can be calculated or measured by the same method used for determining the content of the iron(III)-containing particles in the complex.

The weight of the microfibrous cellulose contained in the complex can be evaluated by subtracting, from the weight of the complex, the weight of zero-valent iron and trivalent particles calculated from the total supported amount (in terms of elemental iron) of zero-valent and trivalent iron in the complex. The supported amount of zero-valent iron and trivalent iron relative to 1 g of the microfibrous cellulose can be calculated from the total supported amount of zero-valent and trivalent iron in the complex and the weight of the microfibrous cellulose contained in the complex.

The microfibrous cellulose is, for example, one in which cellulose fibers are longitudinally torn and made fine, and is preferably microfibrillated cellulose. Longitudinal tearing of the cellulose fibers means that the cellulose fibers are torn along their fiber direction.

The average fiber length of the microfibrous cellulose is, for example, from 0.5 to 1.5 mm, preferably from 0.5 to 1.2 mm, and particularly preferably from 0.6 to 0.8 mm. The average fiber diameter of the microfibrous cellulose is, for example, from 0.5 to 50 μm.

The aspect ratio (average fiber length / average fiber diameter) of the microfibrous cellulose is preferably from 5 to 10000, more preferably from 7 to 5000, and still more preferably from 10 to 3000.

In the microfibrous cellulose, the fiber length and the fiber diameter are the length of the major axis and the minor axis length of the fiber in a two-dimensional particle image observed with an SEM.

In one embodiment, the aspect ratio of the microfibrous cellulose is a value obtained by measuring the lengths of the major axes of ten or more cellulose fibers in a two-dimensional SEM cellulose image and the minor axis lengths of the same cellulose fibers, and then dividing an average fiber length, which is an average value of the fiber lengths of the major axes, by an average fiber diameter, which is an average value of the minor axis lengths, to thereby calculate the aspect ratio. Alternatively, the aspect ratio of the microfibrous cellulose may be a value that is calculated by dividing the average fiber length by the average fiber diameter using the average fiber length and the average fiber diameter (or the reference fiber diameter) described in product information published by the manufacturer.

The complex may contain other components, but, for example, the total content of the microfibrous cellulose and the iron(III)-containing particles accounts for 50 wt.% or more, preferably 60 wt.% or more, particularly preferably 70 wt.% or more, most preferably 80 wt.% or more, and especially preferably 90 wt.% or more of the total amount of the complex. When the content percentage of the microfibrous cellulose and the iron(III)-containing particles is less than the range described above, it tends to be difficult to efficiently and selectively adsorb arsenic.

The form of the complex is not particularly limited as long as the effect of the present disclosure is not impaired. However, the complex is preferably in a gel form, a powder form, or a pellet form from the perspective of easy recovery from an aqueous solution after arsenic in the aqueous solution has been adsorbed.

The method for causing the complex to adsorb arsenic dissolved in an aqueous solution is not particularly limited, and examples thereof include a method of filling a column or the like with the complex, and passing, through the complex, an aqueous solution in which arsenic is dissolved, and a method of adding the complex to an aqueous solution in which arsenic is dissolved and stirring the mixture.

FIG. 8 shows a state in which metal particles (iron(III)-containing particles (2)) have grown on a microfibrous cellulose (1). When a plurality of particles smaller than the fiber diameter are bonded to the surface of the microfibrous cellulose fiber, a larger amount of iron can be supported than when the iron compound is adsorbed only on the surface of the fiber. In addition, arsenic can be adsorbed on more surfaces in the particle by setting the aspect ratio to 2 or greater.

Arsenic(V) is present as arsenate ions in an aqueous solution. In the complex, at least one iron compound selected from iron oxide, iron hydroxide, and iron oxyhydroxide undergoes complex formation via the hydroxyl groups of

the arsenic (particularly, arsenate ions) in water, and thereby the complex adsorbs and fixes arsenic (particularly, the arsenate ions) (FIG. 8) (see below).

[Chem. 1]

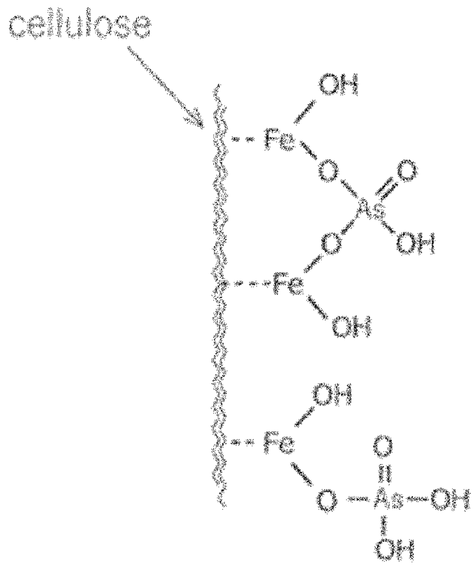

[Chem. 2]

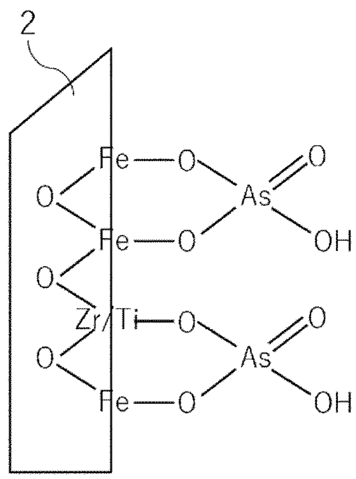

In [Chem. 1], the "Fe" connected to the cellulose by a dotted line means iron of the iron compound contained in the iron(III)-containing particles adsorbed by the cellulose, and the chemical structure thereof shows a state in which the iron adsorbs and fixes arsenic as described above.

The chemical structure in [Chem. 2] shows a state in which metals (Fe, Zr, and Ti) contained in the iron(III)-containing particles (2) adsorb and fix arsenic.

The arsenic adsorption capacity of the complex is, for example, 300 μmol/g or greater, preferably 500 μmol/g or greater, more preferably 900 μmol/g or greater, and even more preferably 1300 μmol/g or greater. The upper limit value of the arsenic adsorption capacity is, for example, 5000 μmol/g. That is, the arsenic adsorption capacity of the complex may be any combination of these upper and lower limit values, and is, for example, from 300 μmol/g to 5000 μmol/g, preferably from 500 μmol/g to 5000 μmol/g, more preferably from 900 μmol/g to 5000 μmol/g, and still more preferably from 1300 μmol/g to 5000 μmol/g.

The arsenic adsorption capacity per 1 mol of the iron(III)-containing particles (in terms of elemental iron) contained in the complex is, for example, 0.2 mol or greater, preferably 0.3 mol or greater, and particularly preferably 0.5 mol or greater. The upper limit value of the arsenic adsorption capacity is, for example, 10 mol, and is particularly 5 mol. That is, the arsenic adsorption capacity per 1 mol of the iron(III)-containing particles (in terms of elemental iron) contained

in the complex may be any combination of these upper and lower limit values, and is, for example, from 0.2 mol to 10 mol, preferably from 0.3 mol to 10 mol, more preferably from 0.5 mol to 10 mol, and even more preferably from 0.5 mol to 5 mol.

At least one iron compound selected from iron oxide, iron hydroxide, and iron oxyhydroxide has high affinity for arsenic ions, but has low affinity for other anions such as sulfate ions, halide ions, and dihydrogen phosphate ions containing phosphorus, which has chemical properties similar to those of arsenic. Since the complex contains the iron compound having the above-described characteristics, the complex can selectively adsorb arsenic without experiencing a decrease in the arsenic adsorption capacity even in the presence of other anions.

The arsenic adsorption capacity of the arsenic adsorbent is the adsorption amount when 0.01 g of the complex is immersed in 10 mL of a 1000 mg/L arsenic(V) aqueous solution at 25°C and then shaken for 30 minutes using a shaker, and is calculated from the equation described in the Examples.

Arsenic (particularly arsenic(V)) dissolved in water can be recovered using the complex according to an embodiment of the present disclosure.

In addition, after arsenic has been adsorbed by the complex according to an embodiment of the present disclosure, the volume can be remarkably reduced by combusting the complex, and thus the cost for disposal can be reduced.

The complex has the characteristics described above and thus is useful as an arsenic (particularly arsenic(V)) adsorbent for adsorbing and recovering arsenic from arsenic-contaminated water.

## Production Method of Complex

The complex can be produced by, for example, mixing the microfibrous cellulose and the iron compound in water in the presence of a crystal habit modifier to cause the microfibrous cellulose to adsorb the iron compound (adsorption step), and then carrying out a heating treatment (hydrothermal treatment step).

### Adsorption Step

This step is a step of mixing the microfibrous cellulose and the iron compound in water in the presence of a crystal habit modifier to cause the microfibrous cellulose to adsorb the iron compound.

As the iron compound, for example, a trivalent iron compound such as $FeCl_3$ can be used.

The usage amount of the iron compound is, for example, from 1 to 100 mmol, and preferably from 1 to 50 mmol per 1 g of the microfibrous cellulose.

The usage amount of the iron compound is, for example, from 1 to 10 g per 1 g of the microfibrous cellulose. From the viewpoint of obtaining a complex having a particularly excellent arsenic adsorption capacity, the usage amount of the iron compound is preferably from 2 to 8 g, and particularly preferably from 3 to 6 g.

As the crystal habit modifier, a compound that promotes the acicular crystal formation of the iron(III)-containing particles is preferably selected and used, and for example, sodium sulfate can be used.

The usage amount of the crystal habit modifier is, for example, from 0.1 to 10 parts by weight, preferably from 0.1 to 5 parts by weight, and particularly preferably from 0.1 to 2 parts by weight, per 1 part by weight of the iron compound. By using the crystal habit modifier in the above range, acicular crystal formation of the iron compound and the formation of the iron(III)-containing particles into acicular particles can be promoted, and/or the aspect ratio of the acicular particles can be increased, and the arsenic adsorption surface can be further expanded.

In the method according to an embodiment of the present disclosure, a metal compound having good affinity for arsenic may also be used to improve the arsenic adsorption capacity.

Examples of the metal compound include zirconium compounds such as zirconium oxide ($ZrO_2$), zirconium hydroxide, zirconium oxyhydroxide, zirconium oxychloride ($ZrCl_2O$), and zirconium chloride ($ZrCl_4$); and titanium compounds such as titanium oxide, titanium chloride, titanium hydroxide, and titanium oxyhydroxide. One type of these may be used alone, or two or more types thereof may be used in combination.

From the viewpoints of excellent affinity for arsenic and a particularly excellent effect of improving the amount of arsenic adsorption, the metal compound is preferably at least one selected from the group consisting of an oxide, a hydroxide, and an oxyhydroxide of the metal, more preferably at least one selected from the group consisting of an oxide and an oxyhydroxide of the metal, and still more preferably a zirconium compound such as zirconium oxychloride ($ZrCl_2O$).

The usage amount (total amount when two or more types are used) of the metal compound is, for example, from 0.01 to 10 parts by weight and preferably from 0.01 to 2 parts by weight per 1 part by weight of the iron compound.

The usage ratio (molar ratio) [Fe/(Zr + Ti)] of the iron compound (in terms of elemental iron) to the zirconium compound and/or the titanium compound (in terms of the elemental metal; the total amount when two or more are contained) is, for example, from 1 to 100. The upper limit value of this molar ratio is preferably 50, and particularly preferably 10. The lower limit value of this molar ratio is preferably 3, particularly preferably 5, and most preferably 8, That is, the usage ratio (molar ratio) [Fe/(Zr + Ti)] may be any combination of these upper and lower limit values, but is preferably from 3 to 50,

more preferably from 5 to 50, and still more preferably from 8 to 10.

Here, "Zr + Ti" means "Zr (zirconium compound) and/or Ti (titanium compound)". That is, [Fe/(Zr + Ti)] means "iron/(zirconium compound and/or titanium compound)".

In one embodiment, the molar ratio [Fe/(Zr + Ti)] is preferably a molar ratio of "iron/zirconium compound" or of "iron/titanium compound".

When the metal compound is used, the metal compound may be added to water together with the iron compound and stirred such that the metal compound is adsorbed on the microfibrous cellulose.

The microfibrous cellulose is, for example, one in which cellulose fibers are longitudinally torn and made fine, that is, microfibrillated cellulose. The microfibrous cellulose can be produced, for example, by subjecting cellulose fibers having a specific fiber length to, for example, a beating treatment and/or a mechanical shearing treatment (for example, a homogenization treatment) or the like to thereby tear the cellulose fibers along the fiber direction.

As the cellulose fibers, for example, cellulose fibers derived from wood pulp (softwood pulp, hardwood pulp) or cotton linter pulp can be preferably used. One type of these may be used alone, or two or more types thereof may be used in combination. Note that the pulp may contain foreign components such as hemicellulose.

The surface of the cellulose fiber may be provided with a functional group such as a hydrophilic group.

The average fiber length of the microfibrous cellulose is, for example, from 0.5 to 1.5 mm, preferably from 0.5 to 1.2 mm, and particularly preferably from 0.6 to 0.8 mm. The average fiber diameter of the microfibrous cellulose is, for example, from 0.5 to 50 μm.

Examples and preferred examples of the aspect ratio of the microfibrous cellulose are as described in the section titled "Complex".

As the microfibrous cellulose, for example, commercially available products such as microfibrous cellulose of the trade names "Celish", "Roka Meijin", "PC110S", and "PC110T" (all available from Daicel Miraizu Ltd.) can be used.

Through this step, the iron compound and, if necessary, the metal compound (or a mixed oxide of iron and the metal) can be adsorbed by the microfibrous cellulose. The mode of adsorption of the iron compound (when the metal compound is used together with the iron compound, the iron compound and the metal compound, or a mixed oxide of iron and the metal) onto the microfibrous cellulose is not particularly limited, and for example, the iron compound may be adsorbed to the microfibrous cellulose in the form of ions.

Hydrothermal Treatment Step

The hydrothermal treatment step is a step of subjecting the microfibrous cellulose having the iron compound adsorbed thereon to a heating treatment in water.

The heating treatment temperature is, for example, from 100 to 150°C. The pressure during the heating treatment is, for example, from ordinary pressure to 5 atm, and preferably from ordinary pressure to 3 atm. The heating treatment time is, for example, from 0.5 to 10 hours. The heating treatment can be carried out using a well-known and commonly-used heating means (for example, a heat block-type thermal decomposition system).

The heating treatment time is, for example, from 0.5 to 10 hours, preferably from 1 to 7 hours, and particularly preferably from 3 to 7 hours. When the heating treatment time is increased within the above range, crystallization tends to be promoted.

Iron(III)-containing particles, at least some of which have an acicular shape, can be precipitated on the surface of the microfibrous cellulose by subjecting the microfibrous cellulose having the iron compound adsorbed thereon to the heating treatment in water.

When a zirconium compound and/or a titanium compound is used together with an iron compound, through the heating treatment, iron(III)-containing particles, at least some of which have an acicular shape, can be precipitated on the surface of the microfibrous cellulose with the iron(III)-containing particles containing at least one iron compound (= water-insoluble trivalent iron compound) selected from iron oxide, iron hydroxide and iron oxyhydroxide, and an oxide, hydroxide, or oxyhydroxide of at least one metal selected from zirconium and titanium, or with the iron(III)-containing particles containing a mixed oxide of iron(III) and zirconium and/or titanium.

Through this step, a complex is obtained in which iron(III)-containing particles, at least some of which are acicular, are supported on microfibrous cellulose.

Arsenic Adsorbent

An arsenic adsorbent according to an embodiment of the present disclosure includes the above-described complex. The arsenic adsorbent may contain another component in addition to the complex, but the proportion of the complex accounting for the total amount of the arsenic adsorbent (or the total amount of non-volatile content included in the arsenic adsorbent) is, for example, 50 wt.% or greater, preferably 60 wt.% or greater, more preferably 70 wt.% or greater, particularly preferably 80 wt.% or greater, most preferably 90 wt.% or greater, and especially preferably 95 wt.% or greater.

Note that the arsenic adsorbent may consist of only the complex.

Also note that in the present disclosure, the term "non-volatile content" refers to the total weight of components other than solvents (including water and organic solvents), and is, for example, components remaining after heating 1 g of the arsenic adsorbent at 100°C for 1 hour under ordinary pressure.

The form of the arsenic adsorbent is not particularly limited as long as the effect of the present disclosure is not impaired. However, the arsenic adsorbent is preferably in a gel form, a powder form, or a pellet form from the perspective of easy recovery from an aqueous solution after arsenic in the aqueous solution has been adsorbed.

Since the arsenic adsorbent according to an embodiment of the present disclosure includes the complex, the arsenic adsorbent can be suitably used for an application of adsorbing and removing arsenic(V) dissolved in water.

The arsenic adsorbent can be prepared by producing a complex by the method described above for producing a complex, optionally adding other components, and then molding as necessary.

Method for Producing Purified Water

A method for producing purified water according to an embodiment of the present disclosure includes treating arsenic-contaminated water (water that is contaminated with arsenic, with the arsenic concentration being, for example, 5 mM or greater) with the arsenic adsorbent (or the complex) to obtain purified water (for example, purified water from which 99 wt.% or more (more preferably 99.9 wt.% or more) of the arsenic contained in the contaminated water has been removed).

Arsenic(V) is present as arsenate ions in an aqueous solution. Furthermore, trivalent iron contained in the metal particles undergoes complex formation via the hydroxyl groups of the arsenate ions, and thereby the arsenic adsorbent (or the complex) adsorbs and recovers the arsenic ions.

The method of treating the contaminated water with the arsenic adsorbent is a method of causing the arsenic adsorbent to adsorb the arsenic contained in the contaminated water. The method is not particularly limited, and examples thereof include a method in which a column or the like is filled with the arsenic adsorbent, and the contaminated water is allowed to flow therethrough, and a method in which the arsenic adsorbent is added to the contaminated water and the mixture is stirred.

In the treatment with the arsenic adsorbent, from the viewpoint of being able to more efficiently recover arsenic, the pH of the contaminated water is adjusted to, for example, 10 or less (for example, from 1 to 10, and preferably from 2 to 10), and preferably 8 or less. The pH can be adjusted using a well-known and commonly-used pH adjuster.

Further, after arsenic has been adsorbed by the arsenic adsorbent, the volume of the arsenic adsorbent to which the arsenic is adsorbed can be remarkably reduced by combusting the arsenic adsorbent, and thus the cost for disposal can be reduced.

According to the method for producing purified water according to an embodiment of the present disclosure, arsenic can be efficiently removed from water contaminated with arsenic, and purified water that is free from arsenic contamination can be efficiently produced.

Water Purification Device

A water purification device according to an embodiment of the present disclosure is provided with the arsenic adsorbent (or the complex).

The method of installing the arsenic adsorbent is not particularly limited. For example, the arsenic adsorbent may be installed in a state of being packed into a column or the like.

Therefore, the water purification device may be provided with a column filled with the arsenic adsorbent.

The water purification device may include, in addition to the arsenic adsorbent, necessary components such as a device for supplying non-purified water to the arsenic adsorbent and a device for discharging the water after purification by the arsenic adsorbent.

Since the water purification device is provided with the arsenic adsorbent, arsenic can be efficiently removed from water contaminated with arsenic, and purified water free from arsenic contamination can be efficiently produced.

The configurations and their combinations of the present disclosure described above are merely examples, and addition, omission, substitution, and modification of the configurations may be appropriately made without departing from the gist of the present disclosure. In addition, the present disclosure is not limited by the embodiments and is limited only by the claims.

Examples

The present disclosure will next be described in more detail by way of Examples, but the present disclosure is not limited to the Examples.

Example 1

Adsorption Step

A 50 mL Digi-Tube was charged with 0.10 g of microfibrillated cellulose (average fiber length: from 0.6 to 0.8 mm, reference fiber diameter: from 0.5 to 50 μm, trade name "Roka Meijin", available from Daicel Miraizu Ltd.), 0.68 g (2.5 mmol) of $FeCl_3 \cdot 6H_2O$, 0.41 g (2.9 mmol) of $Na_2SO_4$, and 50 mL of purified water, and the mixture was stirred at room temperature using a homogenizer (OMNI tissue homogenizer TH, available from Omni International, Inc.) until the microfibrillated cellulose was completely dispersed.

The homogenizer that was used was one having a weak shearing force as compared with, for example, a high-pressure homogenizer used for preparing cellulose nanofibers. The use of such a homogenizer made it possible to stir and disperse the microfibrillated cellulose with less energy consumption.

Hydrothermal Treatment Step

After stirring, the mixture was heated at 121°C under 2 atm for 4.0 to 5.0 hours using a heat block-type thermal decomposition system.

After heating was completed, the reaction product was suction filtered, and the obtained filtration residue was dried at 40°C to obtain a complex (1) ($Fe^{III}$-NN-cellulose microfibers (CMF)) in which particles containing iron oxide (or iron oxide and iron oxyhydroxide) (the particles including 12 wt.% or more of acicular particles having a volume-equivalent diameter of less than 1 μm and an aspect ratio of 2 or greater) were supported on the microfibrillated cellulose. An SEM image of the obtained complex (1) is presented in FIG. 1. As shown in FIG. 1, when the complex was observed by SEM, acicular particles were observed on the surface of the microfibrous cellulose. At least 50 acicular particles were observed in the circled portion of the visual field. The complex included, on the surface of the microfibrous cellulose, particles having a pointed tip shape and particles having a diameter (or width) that became smaller toward the tip. It was observed that 80% or more of all the particles observable in the observed visual field were elongated particles having an aspect ratio exceeding 8.

In this complex, the supported amount of the iron(III)-containing particles per 1 g of microfibrous cellulose was 2.5 mmol. Moreover, the average value of the volume-equivalent diameters of 10 acicular particles arbitrarily selected from the SEM image of the complex was 0.16 μm.

Example 2

Adsorption Step

A 50 mL Digi-Tube was charged with 0.10 g of microfibrillated cellulose (average fiber length: from 0.6 to 0.8 mm, reference fiber diameter: from 0.5 to 50 μm, trade name "Roka Meijin", available from Daicel Miraizu Ltd.), 0.68 g (2.5 mmol) of $FeCl_3 \cdot 6H_2O$, 0.41 g (2.9 mmol) of $Na_2SO_4$, 0.088 g (0.27 mmol) of $ZrCl_2O \cdot 8H_2O$, and 50 mL of purified water, and the mixture was stirred at room temperature using a homogenizer (OMNI tissue homogenizer TH, available from Omni International, Inc.) until the microfibrillated cellulose was completely dispersed. (Charged molar ratio of $FeCl_3$ and $ZrCl_2O$, that is, [Fe/Zr (in terms of elemental metal)], of 9/1)

Hydrothermal Treatment Step

After stirring, the mixture was heated at 120°C for 5 hours using a heat block-type thermal decomposition system.

After heating was completed, a filtration residue obtained by suction filtration was dried at 40°C to obtain a complex (2) ($Fe^{III}$/Zr (1.0)-NN-CMF) in which particles containing iron oxide (or iron oxide and iron oxyhydroxide) and zirconium oxide (the particles including 13 wt.% or more of acicular particles having a volume-equivalent diameter of less than 1 μm and an aspect ratio of 2 or greater) and/or particles containing a mixed oxide of iron and zirconium (the particles including 13 wt.% or more of acicular particles having a volume-equivalent diameter of less than 1 μm and an aspect ratio of 2 or greater) were supported on the microfibrillated cellulose. SEM images of the obtained complex (2) are shown in FIGS. 2 and 3(a) (two different visual fields). As shown in FIGS. 2 and 3(a), the complex included, on the surface of the microfibrous cellulose, particles having a pointed tip shape and elongated particles having a diameter (or width) that became smaller toward the tip and an aspect ratio of greater than 2. It was observed that 80% or more of all the particles observable in the two observed visual fields were elongated particles having an aspect ratio exceeding 2.

In this complex, the supported amount of the iron(III)-containing particles per 1 g of microfibrous cellulose was 2.5 mmol. The average value of the volume-equivalent diameters of 10 acicular particles arbitrarily selected from FIG. 2 was 0.53 μm, and the average value of the volume-equivalent diameters of 10 acicular particles arbitrarily selected from FIG.

3(a) was 0.33 μm.

Example 3

A complex (3) ($Fe^{III}$/Zr (1.0)-NN-CMF) was obtained in the same manner as in Example 2 with the exception that the heating time at 120°C in the (hydrothermal treatment step) was changed from 5 hours to 2 hours. FIG. 3(b) shows an SEM image of the obtained complex (3). As shown in FIG. 3(b), it was observed that 90% or more of all the particles on the surface of the microfibrous cellulose of the complex and observable in the observed visual field were particles having a pointed tip shape and particles having a diameter (or width) that became smaller toward the tip and an aspect ratio of greater than 2.

Example 4

A complex (4) ($Fe^{III}$/Zr (1.0)-NN-CMF) was obtained in the same manner as in Example 2 with the exception that the heating time at 120°C in the (hydrothermal treatment step) was changed from 5 hours to 1 hour. An SEM image of the obtained complex (4) is shown in FIG. 3(c). The complex observed in a portion surrounded by a circle in the visual field of the SEM image in FIG. 3(c) included, on the surface of the microfibrous cellulose, particles having a pointed tip shape and particles having a diameter (or width) that became smaller toward the tip. It was also observed that elongated particles having an aspect ratio greater than 2 accounted for approximately 100% of all observable particles in the observed visual field.

Example 5

A complex (5) ($Fe^{III}$/Zr (0.7)-NN-CMF) was obtained in the same manner as in Example 2 with the exception that the charging amounts of $FeCl_3 \cdot 6H_2O$ and $ZrCl_2O \cdot 8H_2O$ in the (adsorption step) were changed to 0.7 times by weight, the complex (5) having, supported on the microfibrillated cellulose, particles containing iron oxide (or iron oxide and iron oxyhydroxide) and zirconium oxide (the particles including acicular particles having a volume-equivalent diameter of less than 1 μm (measured value: 0.1 μm (100 nm)) and an aspect ratio of 2 or greater (measured value: 4) at an amount of 9 wt.% or more of the total weight of the complex) and/or particles containing a mixed oxide of iron and zirconium (the particles including acicular particles having a volume-equivalent diameter of less than 1 μm and an aspect ratio of 4 at an amount of 9 wt.% or more of the total weight of the complex). An SEM image of the obtained complex (5) is shown in FIG. 4 (magnification of 5000 times), and an SEM image of another visual field is shown in FIG. 9 (magnification of 30000 times). As shown in FIG. 9, the complex included, on the surface of the microfibrous cellulose, particles having a pointed tip shape, and elongated particles having a diameter (or width) that became smaller toward the tip and an aspect ratio of 4. It was observed that 90% or more of all the particles observable in the two observed visual fields were elongated particles having an aspect ratio exceeding 4.

In this complex, the supported amount of the iron(III)-containing particles per 1 g of microfibrous cellulose was 1.8 mmol. Moreover, the average value of the volume-equivalent diameters of 10 acicular particles arbitrarily selected from the SEM image of the complex was 0.12 μm.

Example 6

A complex (6) ($Fe^{III}$/Zr (1.0)-NN-CMF) was obtained in the same manner as in Example 2 with the exception that the charging amounts of $FeCl_3 \cdot 6H_2O$ and $ZrCl_2O \cdot 8H_2O$ in the (adsorption step) were changed such that the molar ratio of $FeCl_3$ to $ZrCl_2$, that is, the molar ratio of [Fe/Zr (in terms of the elemental metals), was 1/1, the complex (6) having, supported on the microfibrillated cellulose, particles containing iron oxide (or iron oxide and iron oxyhydroxide) and zirconium oxide (the particles including 13 wt.% or more of acicular particles having a volume-equivalent diameter of less than 1 μm and an aspect ratio of 2 or greater) and/or particles containing a mixed oxide of iron and zirconium (the particles including 13 wt.% or more of acicular particles having a volume-equivalent diameter of less than 1 μm and an aspect ratio of 2). The obtained complex included, on the surface of the microfibrous cellulose, particles having a pointed tip shape, and elongated particles having a diameter (or width) that became smaller toward the tip and an aspect ratio of 2 or greater. It was observed that 90% or more of all particles observable in the two observed visual fields were elongated particles having an aspect ratio of 2 or greater.

In this complex, the supported amount of the iron(III)-containing particles per 1 g of microfibrous cellulose was 1.4 mmol.

Example 7

A complex (7) ($Fe^{III}$/Ti (0.7)-NN-CMF) was obtained in the same manner as in Example 5 with the exception that a $TiCl_4$ aqueous solution (33.8 μL: Ti (8.76 mg, 0.18 mmol)) (Fujifilm Wako Pure Chemical Industries, Ltd.) was used in place of $ZrCl_2O \cdot 8H_2O$ in the (adsorption step), the complex (7) having, supported on the microfibrillated cellulose, particles containing iron oxide and titanium oxide (the particles including 8 wt.% or more of acicular particles having a volume-equivalent diameter of 0.1 μm (100 nm) and an aspect ratio of 2) and/or particles containing a mixed oxide ($Fe_xTi_yO_z$) of iron and titanium (the particles including 8 wt.% or more of acicular particles having a volume-equivalent diameter of 0.1 μm (100 nm) and an aspect ratio of 2 or greater). An SEM image of the obtained complex (7) is shown in FIG. 10. Note that the charged amounts of $FeCl_3 \cdot 6H_2O$ and $TiCl_4$ aqueous solution were 0.7 times by weight, similar to Example 5, and the molar ratio of $FeCl_3$ and $TiCl_4$, that is, the molar ratio of [Fe/Ti (in terms of the elemental metals)], was 9/1. The obtained complex included, on the surface of the microfibrous cellulose, particles having a pointed tip shape, and elongated particles having a diameter (or width) that became smaller toward the tip and an aspect ratio of 2 or greater. It was observed that 90% or more of all particles observable in the two observed fields of view were elongated particles having an aspect ratio of 2 or greater.

In this complex, the supported amount of the iron(III)-containing particles per 1 g of microfibrous cellulose was 1.6 mmol. Moreover, the average value of the volume-equivalent diameters of 10 acicular particles arbitrarily selected from the SEM image of the complex was 0.10 μm.

Reference Example 1

An aqueous solution of 10 wt.% $FeCl_3 \cdot 6H_2O$ (10 mL) and a buffer solution (0.5 mol/L 2-(N-morpholino) ethanesulfonic acid) were added to a flask to bring the total volume to 50 mL, and the solution was adjusted to a pH of 6 using NaOH. Iron(III)-containing particles ($Fe^{III}$ particles) (volume-equivalent diameter: 1 μm) were thereby formed. 10 mL of the prepared solution and 0.10 g of cellulose nanofibers (average fiber length: from 0.6 to 0.8 mm, reference fiber diameter: from 0.5 to 50 μm, trade name "Roka Meijin", available from Daicel Miraizu Ltd.) were added thereto, and the mixture was stirred at room temperature for 1.0 hour using a stirrer. Subsequently, a solid content was obtained by suction filtration, the obtained solid content was dried, and a complex (8) ($Fe^{III}$-CMF) was obtained in which the iron(III)-containing particles were supported on the cellulose nanofibers. An SEM image of the obtained complex (8) is shown in FIG. 5. As shown in FIG. 5, the surface of the microfibrous cellulose contained cubic particles having an aspect ratio of 1. It was observed that 90% or more of all the particles observable in the observed visual field were cubic particles having an aspect ratio of 1.

In this complex, the supported amount of the iron(III)-containing particles per 1 g of microfibrous cellulose was 3.3 mmol. Moreover, the volume-equivalent diameter of the particles contained in the complex was 1.24 μm.

Comparative Example 1

A flask was charged with 10 mL of 10 wt.% $FeCl_3$, 10 mL of 1.0 wt.% $ZrCl_2O$, and a buffer solution, and then the contents were stirred at room temperature for 0.5 hours using a stirrer. Next, while heating the solution to 60°C, NaOH was added to adjust the pH to 6.0, after which the solution was further stirred for 30 minutes and then subjected to suction filtration to obtain a solid content, and the obtained solid content was dried. As a result, particles containing iron oxide (or iron oxide and iron oxyhydroxide) and zirconium oxide (molar ratio of $FeCl_3$ and $ZrCl_2$, that is, [Fe/Zr (in terms of the elemental metals)] = 10/1, acicular particles having an aspect ratio of 2 or greater could not be confirmed) and/or particles containing a mixed oxide of iron and zirconium (molar ratio of $FeCl_3$ and $ZrCl_2$, that is, [Fe/Zr (in terms of the elemental metals)] = 10/1, acicular particles having an aspect ratio of 2 or greater could not be confirmed) were obtained.

Comparative Example 2

A solution prepared by adding 10 wt.% $FeCl_3$ and a buffer solution to a flask was adjusted to a target pH by adding NaOH at room temperature. Subsequently, the mixture was further stirred for 30 minutes and then subjected to suction filtration to obtain a solid content, and the obtained solid content was dried, and thereby particles containing iron oxide (or iron oxide and iron oxyhydroxide) (acicular particles having an aspect ratio of 2 or greater could not be confirmed) were obtained.

The complexes obtained in the Examples and the particles obtained in the Comparative Examples were subjected to the following evaluations.

Evaluation 1

An amount of 0.010 g of a complex obtained in an Example or particles obtained in a Comparative Example was mixed with 10 mL of water at room temperature and stirred for 10 minutes using a stirrer to evaluate dispersibility.
As a result, uniform dispersions were obtained from the complexes obtained in the Examples, and aggregation was suppressed. From this, it is clear that a complex according to an embodiment of the present disclosure can widely retain the surface area of the iron(III)-containing particles that contribute to arsenic adsorption in water. On the other hand, the particles of the Comparative Example were aggregated and precipitated.

Evaluation 2

The arsenic(V) adsorption capacity of the complexes obtained in the Examples and the $Fe^{III}/Zr$ particles obtained in the Comparative Example was determined by the following method.
A 100 mL centrifuge tube was charged with 10 mL of a 1000 mg/L As(V) aqueous solution (pH7) and 0.010 g of a complex of an Example or the particles of a Comparative Example, and the contents were stirred at 25°C for 20 minutes using a shaker.
The mixture was filtered through a membrane filter (nitrocellulose, pore size: 0.45 μm), and the arsenic ion concentration (Ce: μmol/L) in the filtrate was quantified using an inductively coupled plasma (ICP) emission spectrometer (iCAP6300, available from Thermo Fischer Scientific Inc). The initial concentration of the arsenic ions in the solution was defined as $C_0$ (μmol/L), the liquid volume that was added was defined as $V_0$ (L), the weight of the arsenic adsorbent that was used was defined as m (g), and the adsorption capacity (μmol/g) was calculated from the following equation.

$$\text{Adsorption capacity} = (C_0 - Ce) \times V_0/m$$

Evaluation 3

The volume reduction ratio of each complex obtained in the Examples was measured by the following method.
An amount of 0.10 g (w1) of the complex was combusted at 800°C for 1 hour, the weight (w2) of the ash remaining after the combustion was measured, and the volume reduction ratio was calculated from the following equation.

$$\text{Volume reduction ratio (\%)} = (w1 - w2)/w1 \times 100$$

The results are shown in Table 1 below.

[Table 1]

| | Complex | Iron content (μmol) per 1 g of complex | Iron content (mmol) per 1 g of CMF | As adsorption amount (mol) per 1 mol of iron | As adsorption capacity (μmol/g) | Volume reduction ratio (%) |
|---|---|---|---|---|---|---|
| Example 1 | $Fe^{III}$-NN-CMF | 2300 | 2.5 | 0.4 | 910 | 52 |
| Example 2 | $Fe^{III}/Zr$(1.0)-NN-CMF Charging ratio ($Fe^{III}/Zr$) = 9/1 | 2000 | 2.5 | 0.6 | 1130 | 48 |
| Example 5 | $Fe^{III}/Zr$(0.7)-NN-CMF Charging ratio ($Fe^{III}/Zr$) = 9/1 | 2500 | 1.8 | 0.6 | 1600 | - |
| Example 6 | $Fe^{III}/Zr$(1.0)-NN-CMF Charging ratio ($Fe^{III}/Zr$) = 1/1 | 2000 | 1.4 | 0.7 | 1480 | - |
| Example 7 | $Fe^{III}/Ti$(0.7)-NN-CMF Charging ratio ($Fe^{III}/Ti$) = 9/1 | 1600 | 1.6 | 1.1 | 1690 | 55 |

(continued)

| | Complex | Iron content (μmol) per 1 g of complex | Iron content (mmol) per 1 g of CMF | As adsorption amount (mol) per 1 mol of iron | As adsorption capacity (μmol/g) | Volume reduction ratio (%) |
|---|---|---|---|---|---|---|
| Reference Example 1 | $Fe^{III}$-CMF | - | 3.3 | 0.16 | 450 | - |
| Comparative Example 1 | $Fe^{III}$/Zr | - | - | 0.02 | 750 | - |

From Table 1 above, it is clear that when acicular particles containing iron oxide are supported on the surface of the microfibrous cellulose, the arsenic adsorption amount is significantly improved. In addition, it is found that when acicular particles containing iron oxide and zirconium oxide (and/or a mixed oxide of iron and zirconium), or iron oxide and titanium oxide (and/or a mixed oxide of iron and titanium) are supported on the surface of the microfibrous cellulose, the arsenic adsorption capacity is further improved.

Moreover, the results make it clear that a complex according to an embodiment of the present disclosure can efficiently adsorb and recover arsenic in a solution and can significantly reduce the concentration of arsenic in the solution, and that after the complex has adsorbed the arsenic, the volume of the complex can be significantly reduced by firing, and thereby the cost for disposal such as landfill can be significantly reduced.

Evaluation 4

A complex obtained in an Example was packed into a Teflon tube having an inner diameter of 2 mm and a length of 5 cm, and both ends of the tube were packed with Teflon wool, and thereby a solid-phase column was prepared, and an experiment of removing arsenic through the column was carried out.

The pH in the column was adjusted by passing 20 mL of a 0.1 mol/L buffer solution through the solid-phase column. Subsequently, 5 mL of an arsenic-containing buffer solution (initial arsenic concentration $C_0$ = 5 μmol/L) was passed through the column at a flow rate of approximately 1 mL/min, and the arsenic ion concentrations ($C_e$: μmol/L) in the distillate and in the arsenic-containing buffer solution were quantified using an ICP emission spectrometer (iCAP6300, available from Thermo Fischer Scientific Inc). The initial concentration of arsenic ions in the distillate was defined as $C_0$ (μmol/L), and the removal rate (%) was calculated from the following equation. The results indicated that 99.9 wt.% of the arsenic in the aqueous solution was successfully removed by all of the complexes (1), (2), (5), (6), and (7).

$$\text{Removal rate (\%)} = (C_0 - C_e)/C_0 \times 100$$

Evaluation 5

With respect to the complex (1), an aqueous arsenic solution (initial arsenic concentration: 10 μmol/L) adjusted to a pH of from 2 to 12 using 0.01 mol/L nitric acid or a buffer solution was prepared, and the pH-dependence of the arsenic removal rate was evaluated.

An amount of 0.02 g of the complex (1) was added to 10 mL of the aqueous arsenic solution, and the mixture was stirred at 25°C for 20 minutes using a shaker. The mixture was filtered through a membrane filter (nitrocellulose, pore size: 0.45 μm), and the arsenic ion concentration ($C_e$: μmol/L) in the filtrate was quantified by using an ICP emission spectrometer (iCAP6300, available from Thermo Fischer Scientific Inc). The initial concentration of arsenic ions in the solution was defined as $C_0$ (μmol/L), and the removal rate (%) was calculated from the following equation.

$$\text{Removal rate (\%)} = (C_0 - C_e)/C_0 \times 100$$

A buffer solution was prepared using acetic acid (pH from 3 to 5), 2-(N-morpholino)-ethane sulfonic acid (pH of 6), 4-(2-hydroxyethyl)-1-piperazine ethane sulfonic acid (pH from 7 to 8), ammonium chloride (pH of 9), 3-[N-tris(hydroxymethyl) methyl-3-amino]-1-propane sulfonic acid (pH of 9), 3-cyclohexylamino propane sulfonic acid (pH from 10 to 12), and sodium hydroxide.

The results are shown in FIG. 6. From FIG. 6, it is clear that the complex (2) obtained in the Examples exhibits an arsenic adsorption rate exceeding 90% at a pH of 10 or lower. It is also clear that an arsenic adsorption rate near 100% is exhibited at a pH of 8 or lower.

Evaluation 6

With respect to the complex (2), arsenic aqueous solutions (initial arsenic concentration: 10 μmol/L, pH of 3) for which the chloride ion, sulfate ion, and phosphate ion concentrations were set to 0.1 mmol/L, 1 mmol/L, or 100 mmol/L using sodium chloride, sodium sulfate, sodium phosphate, and the above-mentioned buffer solution (see Evaluation 5) were prepared, and the change in the arsenic removal rate in the presence of coexisting anions was evaluated.

An amount of 0.02 g of the complex (2) was added to 10 mL of the aqueous arsenic solution, and the mixture was stirred at 25°C for 20 minutes using a shaker. The arsenic ion concentration ($C_e$: μmol/L) was quantified using an ICP emission spectrometer (iCAP6300, available from Thermo Fischer Scientific Inc). The arsenic adsorption rate was calculated, and a change in the arsenic adsorption rate of the complex (2) in the presence of anions was confirmed.

$$\text{Removal rate} = (C_0 - C_e)/C_0 \times 100$$

The results are presented in FIG. 7. From FIG. 7, it is clear that when anions coexist (in particular, even when phosphorus having chemical properties similar to those of arsenic is present), the complex (2) obtained in the Examples efficiently adsorbs arsenic(V) in the same manner as when anions do not coexist.

Evaluation 7

With respect to the complexes (1), (2), (5), (6), and (7), hydrochloric acid was added to elute trivalent iron as iron(III) ions, and the concentration of the iron(III) ions in the eluate was measured to evaluate the total supported amount of iron (in terms of elemental iron) per 1 g of the microfibrous cellulose.

A 50 mL centrifuge tube was charged with 0.01 g of the complex (1) and 5 mL of 6 mol/L hydrochloric acid, and the mixture was stirred at room temperature for 20 minutes using a shaker. The mixture was filtered through a membrane filter (nitrocellulose, pore size: 0.45 μm), and the iron ion concentration (Ce: mol/L) in the filtrate was quantified using an ICP emission spectrometer (iCAP6300, available from Thermo Fischer Scientific Inc). When the weight of the complex was defined as m (g), and the usage amount of hydrochloric acid used defined as V (mL), the total supported amount of iron (in terms of elemental iron) per 1 g of the complex was evaluated from the following equation.

$$\text{Total supported amount} = Ce \times V/m$$

The weight of the microfibrous cellulose was evaluated by subtracting the supported amount of iron determined as described above from the weight of the complex, and the supported amount of iron relative to 1 g of the microfibrous cellulose (iron content per 1 g of the CMF, Table 1) was calculated.

To summarize the above, configurations and variations of the present disclosure are additionally described below.

[1] A complex containing microfibrous cellulose and iron(III)-containing particles supported on the microfibrous cellulose, wherein
at least some of the iron(III)-containing particles are particles having an aspect ratio of 2 or greater.
[2] The complex according to [1], wherein a supported amount (in terms of elemental iron) of the iron(III)-containing particles per 1 g of the microfibrous cellulose is from 1 to 100 mmol.
[3] The complex according to [1] or [2], wherein the microfibrous cellulose is microfibrillated cellulose.
[4] The complex according to any one of [1] to [3], wherein the iron(III)-containing particle has a volume-equivalent sphere diameter of less than 1 μm.
[5] The complex according to any one of [1] to [4], wherein the iron(III)-containing particles contain at least one iron compound selected from iron oxide, iron hydroxide, and iron oxyhydroxide.
[6] The complex according to any one of [1] to [5], wherein the iron(III)-containing particles contain: at least one iron compound selected from iron oxide, iron hydroxide, and iron oxyhydroxide; and an oxide, hydroxide, or oxyhydroxide of at least one metal selected from zirconium and titanium; and a molar ratio of the iron compound (in terms of elemental iron) to the oxide, hydroxide, or oxyhydroxide of the metal (in terms of the elemental metal; the total amount when two or more are contained), that is, the molar ratio of [iron/(zirconium and/or titanium)], is from 1 to 100.
[7] A method for producing a complex, the method including mixing microfibrous cellulose and an iron compound in water in the presence of a crystal habit modifier to cause the microfibrous cellulose to adsorb the iron compound, and subsequently subjecting the mixture to a heating treatment to produce the complex described in any one of [1] to [6].
[8] The method for producing a complex according to [7], wherein in the adsorption of the iron compound by the microfibrous cellulose, at least one metal compound selected from a zirconium compound and a titanium compound is

adsorbed together with the iron compound.

[9] An arsenic adsorbent containing the complex described in any one of [1] to [6].

[10] Use of the complex described in any one of [1] to [6] as an arsenic adsorbent.

[11] A method for producing purified water by treating arsenic-contaminated water with the arsenic adsorbent described in [9] to obtain purified water.

[12] A method for producing purified water by treating arsenic-contaminated water with the complex described in any one of [1] to [6] to obtain purified water.

[13] A water purification device provided with the arsenic adsorbent described in [9].

[14] A water purification device provided with the complex described in any one of [1] to [6].

[15] A usage method for using the complex described in any one of [1] to [6] as an arsenic adsorbent.

Industrial Applicability

The complex of the present disclosure can efficiently adsorb and recover arsenic dissolved in water. Furthermore, after the complex has adsorbed arsenic, the complex can be combusted and reduced in volume, and thereby the cost for disposal such as landfill can be significantly reduced. Therefore, the complex can be suitably used in applications of purifying arsenic-contaminated water.

Reference Signs List

1 Microfibrous cellulose

2 Iron(III)-containing particles

## Claims

**1.** A complex comprising microfibrous cellulose and iron(III)-containing particles supported on the microfibrous cellulose,
at least some of the iron(III)-containing particles being particles having an aspect ratio of 2 or greater.

**2.** The complex according to claim 1, wherein a supported amount (in terms of elemental iron) of the iron(III)-containing particles per 1 g of the microfibrous cellulose is from 1 to 100 mmol.

**3.** The complex according to claim 1 or 2, wherein the microfibrous cellulose is microfibrillated cellulose.

**4.** The complex according to claim 1 or 2, wherein the iron(III)-containing particles contain at least one iron compound selected from iron oxide, iron hydroxide, and iron oxyhydroxide.

**5.**

The complex according to claim 1 or 2, wherein
the iron(III)-containing particles contain:

at least one iron compound selected from iron oxide, iron hydroxide, and iron oxyhydroxide; and
an oxide, hydroxide, or oxyhydroxide of at least one metal selected from zirconium and titanium;

and
a molar ratio of the iron compound (in terms of elemental iron) to the oxide, hydroxide, or oxyhydroxide of the metal (in terms of the elemental metal; the total amount when two or more are contained), the molar ratio of [iron/(zirconium and/or titanium)], is from 1 to 100.

**6.** The complex according to claim 1 or 2, wherein the iron(III)-containing particle has a volume-equivalent sphere diameter of less than 1 μm.

**7.** A method for producing a complex, the method comprising mixing microfibrous cellulose and an iron compound in water in the presence of a crystal habit modifier to cause the microfibrous cellulose to adsorb the iron compound, and

subsequently subjecting the mixture to a heating treatment to produce the complex described in claim 1 or 2.

**8.** The method for producing a complex according to claim 5, wherein in the adsorption of the iron compound by the microfibrous cellulose, at least one metal compound selected from a zirconium compound and a titanium compound is adsorbed together with the iron compound.

**9.** An arsenic adsorbent comprising the complex described in claim 1 or 2.

**10.** A method for producing purified water by treating arsenic-contaminated water with the arsenic adsorbent described in claim 9 to obtain purified water.

**11.** A water purification device comprising the arsenic adsorbent described in claim 9.

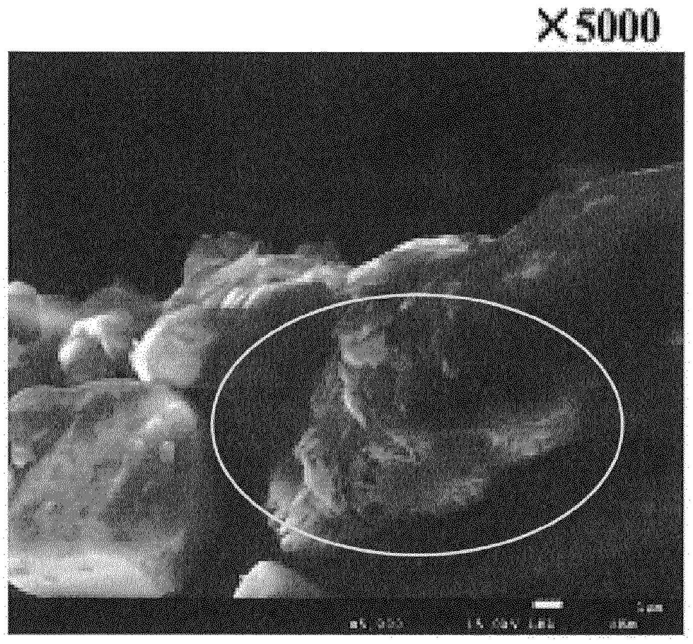


FIG. 1

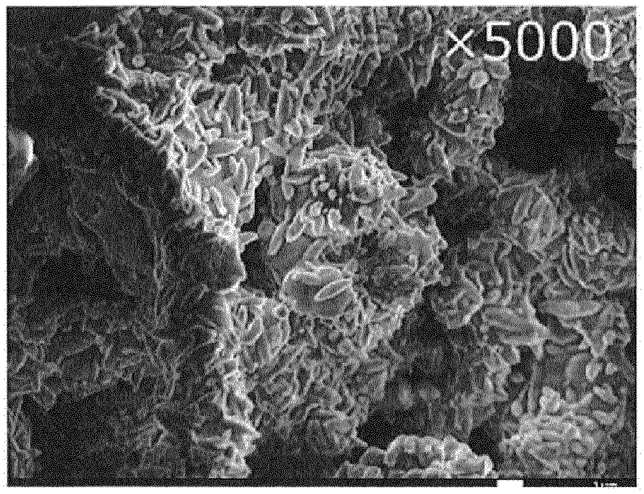


FIG. 2

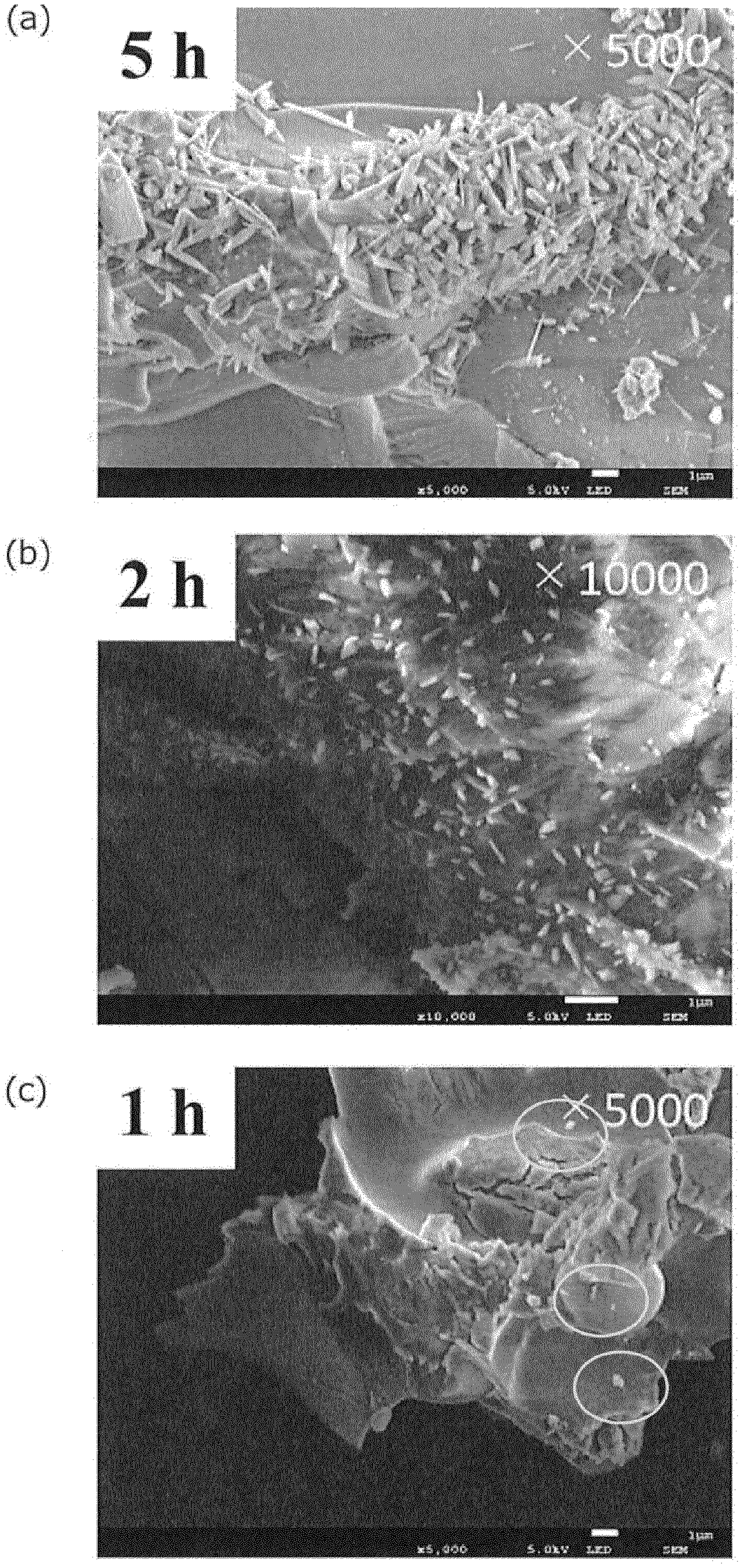


FIG. 3

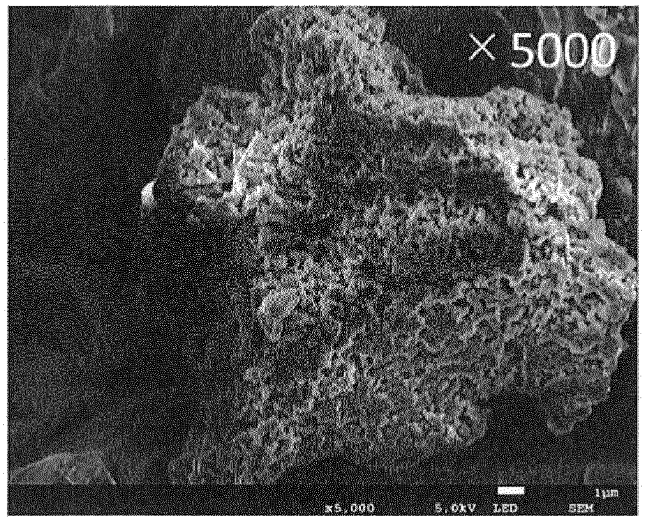
× 5000
x5,000 5.0kV LED SEM
1μm

FIG. 4

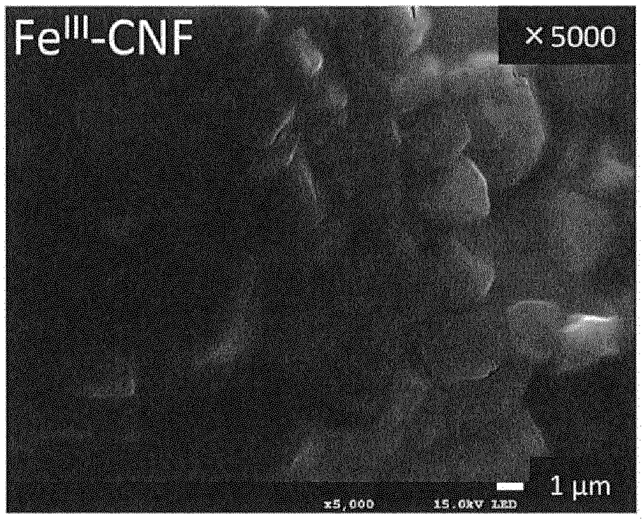
Fe$^{III}$-CNF
× 5000
1 μm
x5,000 15.0kV LED

FIG. 5

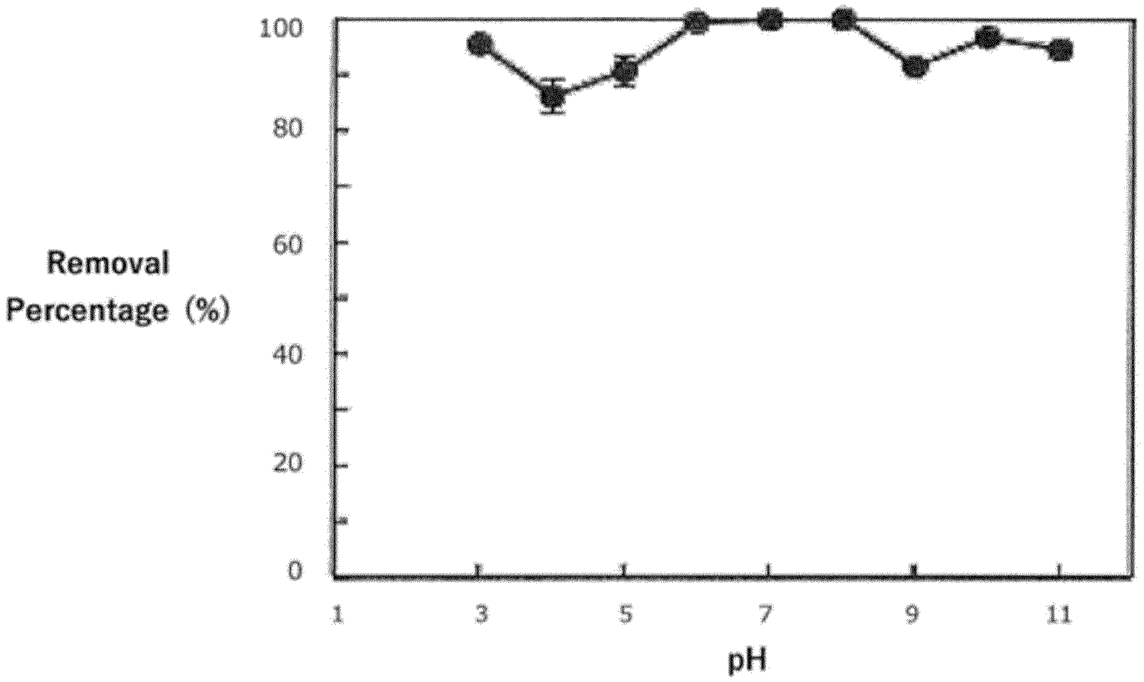
Removal Percentage (%)
100
80
60
40
20
0
1
3
5
7
9
11
pH

FIG. 6

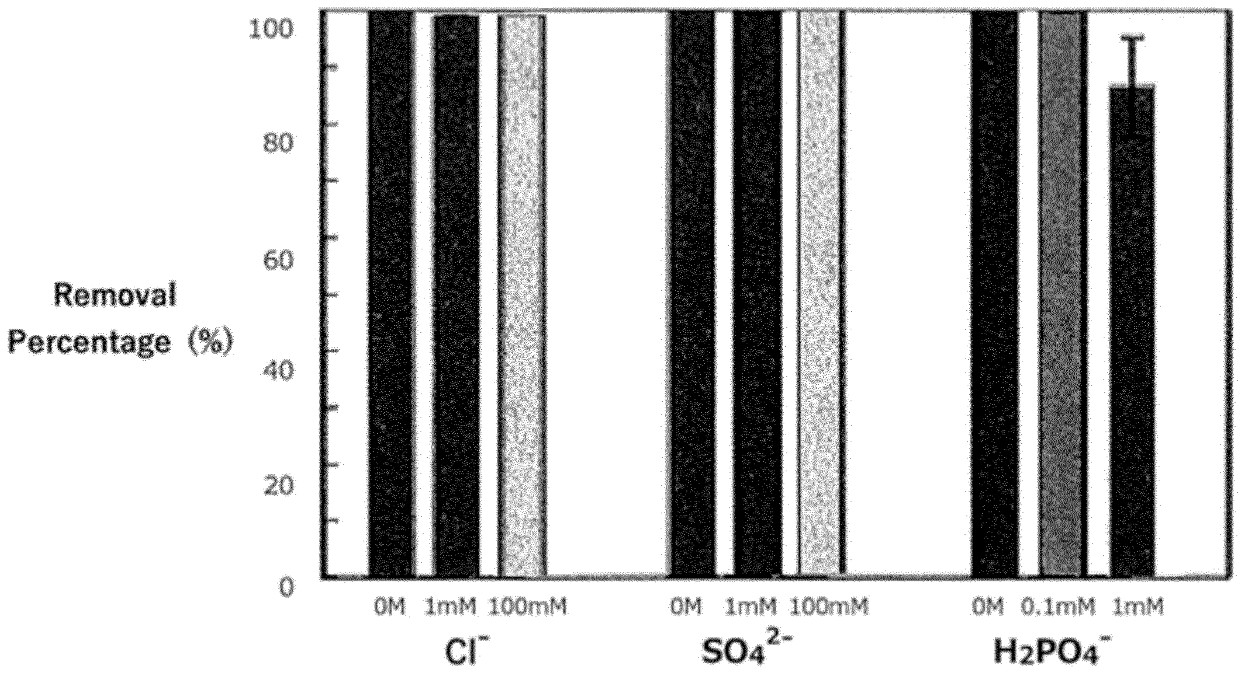
Removal Percentage (%)
100
80
60
40
20
0
0M 1mM 100mM
Cl⁻
0M 1mM 100mM
SO4 2-
0M 0.1mM 1mM
H2PO4⁻

FIG. 7

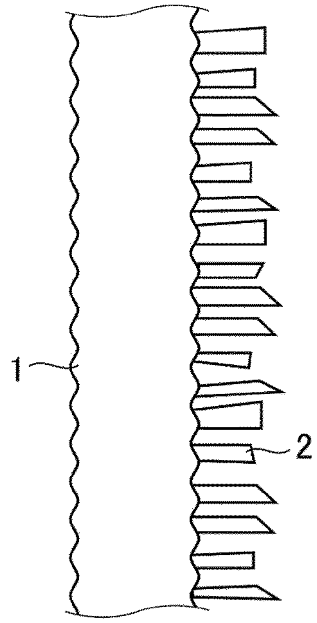


FIG. 8

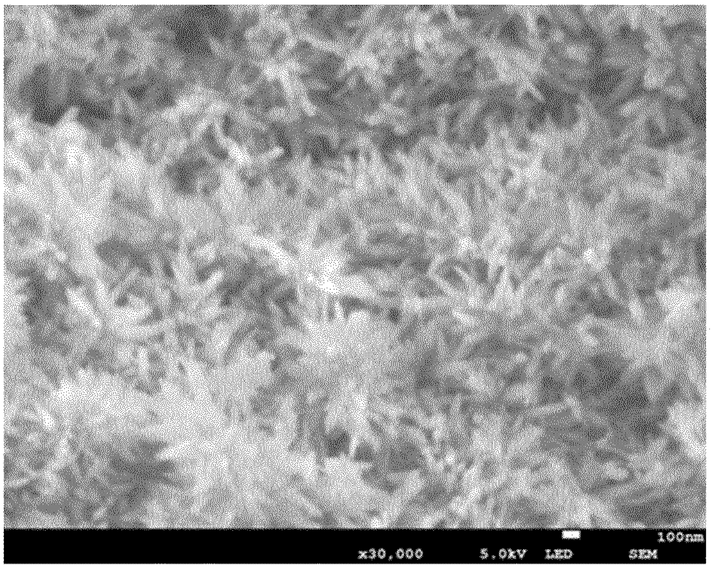


FIG. 9

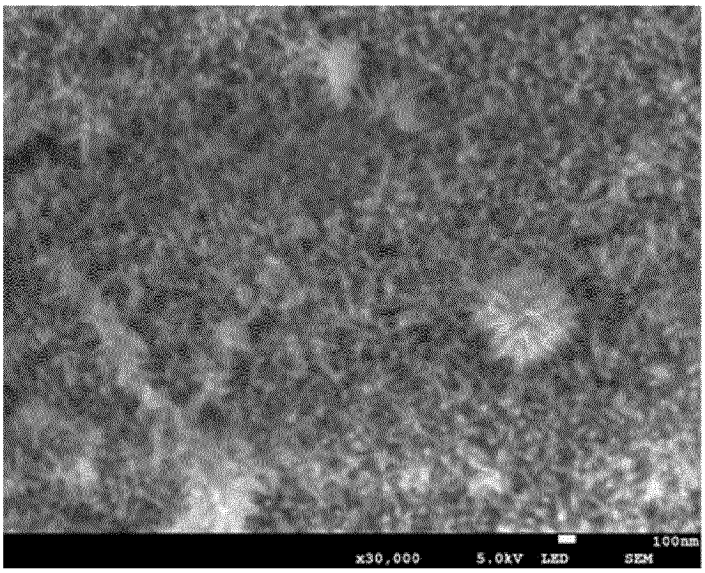


FIG. 10

**INTERNATIONAL SEARCH REPORT**

International application No. **PCT/JP2023/016988**

**A. CLASSIFICATION OF SUBJECT MATTER**

***B01J 20/02***(2006.01)i; ***B01J 20/30***(2006.01)i; ***C02F 1/28***(2023.01)i
FI: B01J20/02 A; B01J20/02 B; B01J20/30; C02F1/28 F

According to International Patent Classification (IPC) or to both national classification and IPC

**B. FIELDS SEARCHED**

Minimum documentation searched (classification system followed by classification symbols)

B01J20/00-20/34, C02F1/28

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2019/172164 A1 (SHIMANE PREFECTURE) 12 September 2019 (2019-09-12) claims, paragraphs [0019]-[0059] | 1-11 |
| Y | JP 3-270708 A (MITSUBISHI HEAVY INDUSTRIES, LTD.) 02 December 1991 (1991-12-02) p. 2, lower right column, lines 7-14 | 1-11 |
| Y | JP 2010-058008 A (TODA KOGYO CORP.) 18 March 2010 (2010-03-18) paragraphs [0020]-[0022] | 1-11 |
| Y | JP 2016-097351 A (TAISEI CORP.) 30 May 2016 (2016-05-30) claims, paragraphs [0024], [0025] | 4-5, 8 |
| Y | JP 2021-171729 A (TORAY INDUSTRIES, INC.) 01 November 2021 (2021-11-01) claims, paragraphs [0018]-[0021] | 4-5, 8 |
| Y | JP 2007-229551 A (TODA KOGYO CORP.) 13 September 2007 (2007-09-13) claims, paragraphs [0024]-[0044] | 4-5, 8 |

☑ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 June 2023** | **11 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

INTERNATIONAL SEARCH REPORT

International application No. PCT/JP2023/016988

C. DOCUMENTS CONSIDERED TO BE RELEVANT

| Category* | Citation of document, with indication, where appropriate, of the relevant passages | Relevant to claim No. |
|---|---|---|
| Y | JP 63-050326 A (ISHIHARA SANGYO KAISHA, LTD.) 03 March 1988 (1988-03-03) p. 2, upper left column, line 15 to upper right column, line 2 | 7 |
| A | JP 2014-171996 A (DAIWABO HOLDINGS CO., LTD.) 22 September 2014 (2014-09-22) | 1-11 |

Form PCT/ISA/210 (second sheet) (January 2015)

**INTERNATIONAL SEARCH REPORT**
**Information on patent family members**

International application No.
**PCT/JP2023/016988**

| Patent document cited in search report | Publication date (day/month/year) | Patent family member(s) | Publication date (day/month/year) |
|---|---|---|---|
| WO 2019/172164 A1 | 12 September 2019 | (Family: none) | |
| JP 3-270708 A | 02 December 1991 | (Family: none) | |
| JP 2010-058008 A | 18 March 2010 | (Family: none) | |
| JP 2016-097351 A | 30 May 2016 | (Family: none) | |
| JP 2021-171729 A | 01 November 2021 | (Family: none) | |
| JP 2007-229551 A | 13 September 2007 | (Family: none) | |
| JP 63-050326 A | 03 March 1988 | (Family: none) | |
| JP 2014-171996 A | 22 September 2014 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008207110 A